# EUROPÄISCHE PATENTSCHRIFT

(11) **EP 1 083 303 B1**
(45) Veröffentlichungstag und Bekanntmachung des Hinweises auf die Patenterteilung: **12.01.2005**
(21) Anmeldenummer: 00117063.8
(22) Anmeldetag: 09.08.2000
(51) Int. Cl.: F01L 31/00, F02D 41/14, F01L 13/00, F01L 1/34, F02D 13/02

(54) **Ventilsteuerung bei Brennkraftmaschinen**
Valve timing for an internal combustion engine
Commande de soupape pour moteur

(30) Priorität: 08.09.1999 DE 19942746; 22.01.2000 DE 10002771
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Kerkau, Martin, 75443 Ötisheim (DE); Hofstetter, Matthias, 77975 Ringsheim (DE)

(56) Entgegenhaltungen:
- EP-A- 0 643 201
- EP-A- 0 735 246
- GB-A- 2 293 894
- US-A- 4 009 695
- US-A- 4 258 671
- US-A- 4 354 460
- US-A- 5 143 031
- US-A- 5 529 031
- US-A- 5 558 051
- US-A- 5 609 126

## Beschreibung

Die Erfindung betrifft eine Brennkraftmaschine mit einer variablen Ventilsteuerung. Es ist bekannt, daß dem Gas- oder Ladungswechsel zwei entscheidende Aufgaben zukommen. Zum einen wird das Arbeitsgas durch Austausch auf den Ausgangszustand des Kreisprozesses gebracht und zum anderen wird der zur Kraftstoffverbrennung erforderliche Sauerstoff in Form von Frischluft bereitgestellt. Das Öffnen und Schließen der Ventile für den Gaswechsels erfolgt mittels der Nockenwelle. Auf der Nockenwelle sind hierfür üblicherweise Zapfen aufgebracht, die für das Ausschieben des verbrauchten Gases und das Ansaugen der Frischgase die separat ausgelegten Gaswechselventile gegen die Ventilfedern drücken. So öffnet kurz vor dem oberen Totpunkt das Einlaßventil bei noch geöffnetem Auslaßventil. Kurz nach dem oberen Totpunkt schließt das Auslaßventil und bei geöffnetem Einlaßventil kann der sich nach unten bewegende Kolben Frischluft ansaugen. Die Zeit, in der beide Ventile (Einlaß- und Auslaßventil) gleichzeitig geöffnet sind, nennt man Überschneidungszeit oder auch Überschneidungsfläche. Die Überschneidungszeit und die Größe der Ventilhübe sind wesentlich für das zur Verfügung gestellt Drehmoment, damit für die Motorleistung und somit auch für den Fahrkomfort verantwortlich. Die Schaltschwellen für die stufenlose Änderung der Ventilsteuerzeiten und des Ventilhubs sind in Abhängigkeit von der Drehzahl und der an der Brennkraftmaschine angreifenden Last festgelegt und in einem entsprechenden Drehzahl-Last-Kennfeld abgespeichert. Die variable Ventilsteuerung an sich ist eine recht komplizierte Lösung von räumlichen Nockenprofilen auf einer längsverschiebbaren Nockenwelle, ermöglicht aber einen deutlichen Drehmomentengewinne im gesamten Drehzahlbereich des Motors.

Aus der DE 198 14 888 A1 ist ein variabler Ventilsteuermechanismus bekannt, bei welcher die Ventilhubkennlinie verändert wird, um eine optimale Motorausgangsleistung zu erreichen. Der Ventilsteuermechanismus ist auf der Seite des Einlaßventils und/oder des Auslaßventils angeordnet. Hier wird zu Beginn einer Veränderung des Betriebszustandes des Verbrennungsmotors von einer niedrigen Motordrehzahl auf eine hohe Motordrehzahl die Ventilöffnungsdauer des Einlaßventils und/oder des Auslaßventils so verändert, daß die Überschneidungsdauer von Einlaßventil und Auslaßventil erhöht wird. Damit ist es möglich, auch während des Übergangs von der niedrigen Motordrehzahl zu der hohen Motordrehzahl einen gleichmäßigen Verlauf der Drehmomentenkurve sicherzustellen und stufige Abschnitte im Drehmomentenverlauf, die zu einer Beeinträchtigung des Fahrkomforts führen, zu vermeiden. Die Beschleunigung erfolgt somit gleichmäßig.

Auch US-A-4.009.695 zeigt ein variabler Ventilsteuermechanismus gemäß dem Oberbegriff des Anspruchs 1 bekannt.

Durch die erfindungsgemäße Wichtung der Schaltschwellen für eine Veränderung der Ventilsteuerzeiten und des Ventilhubes durch den jeweils eingelegten Gang und die Motortemperatur, wird erreicht, daß möglichst bis in hohe Last- und Drehzahlbereiche hinein mit einem kleinen Ventilhub gefahren werden kann, was sich positiv auf den Kraftstoffverbrauch auswirkt und wobei gleichzeitig beim Umschalten von einem kleinen auf einen großen Ventilhub keine Drehmomentensprung auftritt und somit ein ruckfreies Fahren der Brennkraftmaschine möglich ist.

Die Merkmale der weiteren Ansprüche stellen vorteilhafte Ausgestaltungen und Verbesserungen des erfindungsgemäßen Gegenstandes gemäß des Hauptanspruches dar.

Die bisher übliche Schaltschwelle für eine Umschaltung des Ventilhubes wurde in Abhängigkeit von Last und Motordrehzahl festgelegt. Aus Verbrauchsgründen ist man bestrebt, die Brennkraftmaschine in einem größtmöglichen Betriebsbereich mit einem kleinen Ventilhub zu fahren. Vorteilhafterweise wird das Festlegen der Schaltschwellen in der Applikation bzw. auf einen Motorprüfstand ermittelt und dann als entsprechende Werte im Drehzahl-Last-Kennfeld im Steuergerät gespeichert. Mit der vorgeschlagenen Lösung wird erreicht, daß auch bei hohen Geschwindigkeiten verbrauchsgünstig auf kleinem Ventilhub gefahren werden kann. Beim Zurückschalten erfolgt die Ventilhubumschaltung nicht bei demselben Wert im Drehzahl-Last-Kennfeld, sondern um eine wählbare oder vorgebbare Differenz versetzt. Damit hat die Kurve der Ventilschaltung die Form einer Hysterese die zusätzlich gangabhängig ist, wodurch der Fahrkomfort weiter verbessert wird.

Ausführungsbeispiele der Erfindung sind in der Zeichnung dargestellt und in der nachfolgenden Beschreibung näher erläutert.

Es zeigen
- Fig. 1a: ein Prinzipschaltbild für die Realisierung eines minimalen Ventilhubes,
- Fig. 1b: ein Prinzipschaltbild für die Realisierung eines maximalen Ventilhubes,
- Fig. 2: eine schematische Darstellung der erfindungsgemäßen Lösung und
- Fig. 3: ein Drehzahl-Last-Kennfeld mit eingetragenen Schaltschwellen für die Änderung der Ventilsteuerung.

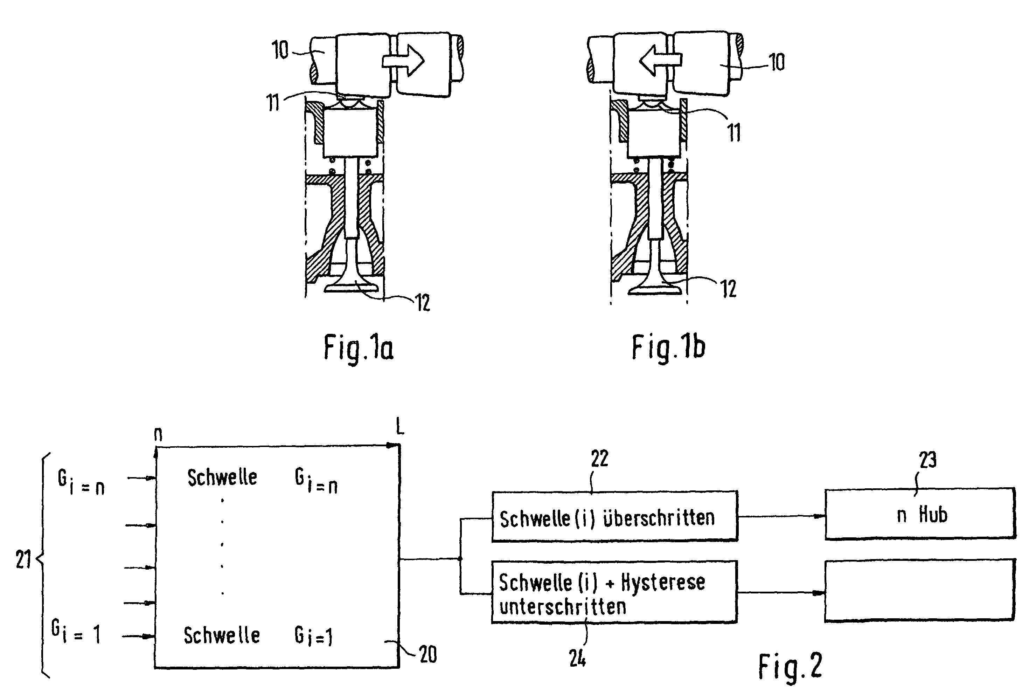

Die Figuren 1a und 1b zeigen jeweils eine Prinzipanordnung einer Nockenwelle 10 mit zugeordnetem Ventil 12, welches durch einen auf der Nockenwelle 10 angeordneten Zapfen 11 bei der Umdrehung der Nockenwelle geöffnet bzw. wieder geschlossen wird. Das Ventil wird durch eine Feder in seiner Ruheposition gehalten. Die Einstellung der Öffnung des Ventils und die Einstellung der Hubgröße des Ventils erfolgt durch eine entsprechende Verschiebung der Nockenwelle entlang ihrer Längsachse. In den Figur 1a und 1b ist die Verschiebbarkeit der Nockenwelle entlang ihrer Längsrichtung symbolisch durch einen Pfeil in axialer Richtung in der Nockenwelle angegeben. Hierbei ist in der Darstellung 1a die Öffnung des Ventil mit kleinem bzw. minimalen Hub und in der Darstellung 1b die Ventilöffnung mit maximalen Hub gezeigt.

Fig. 2 zeigt eine Prinzipanordnung zur Realisierung der erfindungsgemäßen Lösung. Mit dem Bezugszeichen 20 ist symbolisch das Kennfeld angegeben, in welchem die Schaltschwellen für die Ventilsteuerung abgelegt sind. Das Kennfeld 20 erstreckt sich über die Drehzahl n und die angreifende Last L, Eine weitere wichtige Eingangsgröße, die in der Figur 2 mit dem Bezugszeichen 21 versehen ist, ist das Übersetzungsverhältnisses des Getriebes zur Kraftübertragung, welches umgangssprachlich mit Gang bezeichnet wird. Zur Verdeutlichung sind die einzelnen Gänge durch die Symbole Gᵢ₌₁ bis Gᵢ₌ₓ angegeben.
Beim Durchfahren der einzelnen Betriebsbereiche variieren somit die Schaltschwellen für die Umschaltung der Ventilhübe und der Ventilsteuerzeiten. Beim Überschreiten einer für den jeweiligen Gang Gᵢ festgelegten Schwelle, wird in einem Arbeitsschritt 22 dieses Überschreiten erkannt und in einem Arbeitsschritt 23 von einem kleinen auf einen großen Ventilhub umschaltet. Das spätere wieder Unterschreiten der Schaltschwelle wird in einem Arbeitsschritt 24 erkannt und die Ventilhubumschaltung erfolgt wieder von groß zu klein. Für einen optimalen gleichmäßigen Drehmomentverlauf, erfolgt die Umschaltung des Ventilhubes von groß zurück auf klein nicht genau beim Unterschreiten der abgespeicherten Schaltschwelle für das Hochschalten sondern es wird noch eine vorgebbare Differenz berücksichtigt, so daß das Schaltverhalten der Ventile in einer Hysterese verläuft. Durch dieses Schaltverhalten wird sichergestellt, daß ein kontinuierlicher Drehmomentenverlauf sowohl beim Hochschalten als auch beim Herunterschalten von einem Gang in den anderen gewährleistet ist.

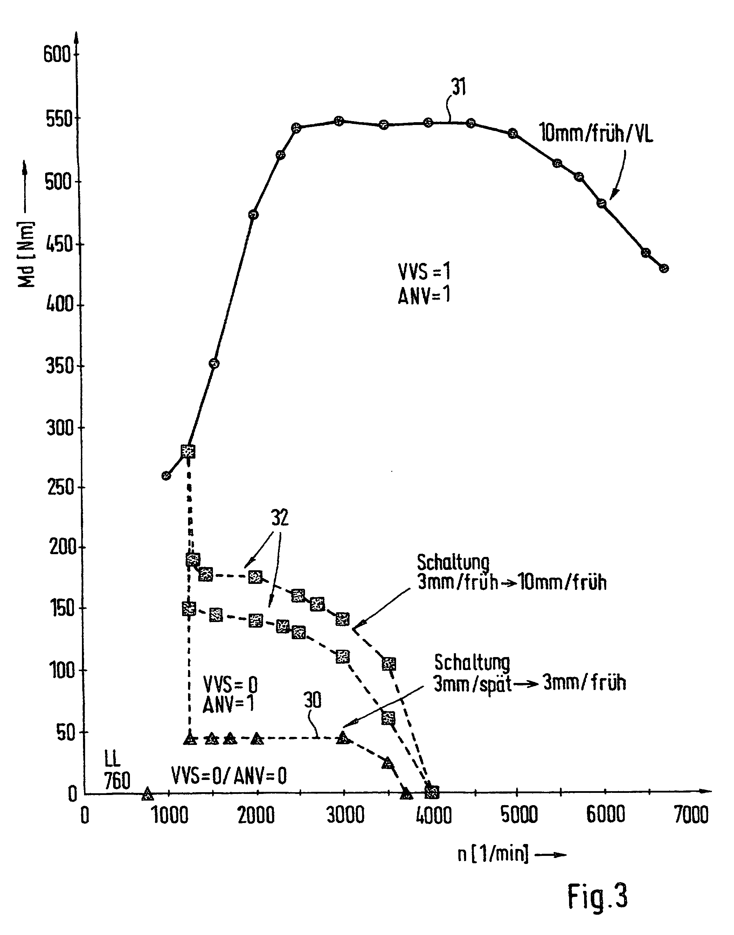

Figur 3 zeigt detaillierter ein Drehzahl-Last-Kennfeld, in welchem verschiedene Schaltschwellen für eine Ventilumschaltung eingetragen sind. Auf der Abszisse ist die Drehzahl n und auf der Ordinate die Last L eingetragen. Dem Kennfeld sind drei verschiedenen Kurven 30, 31 und 32, die unterschiedliche Schaltschwellen angeben, zu entnehmen. Die erste Kurve 30 ist durch die Punkte in Dreiecksform bestimmt ist. Sie gibt eine erste Schaltschwelle an, bei welcher die Steuerzeit für die Ventile bei weiterhin minimalen Hub von Spät auf Früh umschaltet. Die zweite Kurve 31, welche durch einzelne runden Punkte bestimmt ist, zeigt die Schaltschwelle, bei welcher die Ventilsteuerung einen großen bzw. maximalen Ventilhub und eine frühe Ventilöffnung mit großer Überschneidungszeit bewirkt. Damit hat die Brennkraftmaschine bei Vollast ein entsprechend großes Drehmoment. Zwischen der ersten Kurve 30 und 31 sind gangabhängige Schaltschwellen, eingezeichnet. Diese Schaltschwellen 32 sind gangabhängig festgelegt und werden beispielsweise in der Applikation auf dem Motorprüfstand ermittelt. Bei diesen Schaltschwellen bleibt die Ventilsteuerzeit gleich und es erfolgt lediglich eine Umschaltung von einem kleinen auf einen großen Ventilhub. Vorteilhafterweise kann bei diesen Schaltschwellen eine Hysterese berücksichtigt werden. Auch beim Zurückschalten des Ventilhubes von einem großen auf einen kleinen Ventilhub erfolgt eine Berücksichtigung des im Moment eingelegten Ganges am Fahrzeug. Damit ergibt sich auch beim Abbremsen ein hoher Fahrkomfort, der gleichzeitig einen niedrigen Kraftstoffverbrauch aufweist.

Neben der Berücksichtigung des eingelegten Ganges an der Brennkraftmaschine bei der variablen Ventilsteuerung hat auch die augenblickliche Temperatur der Brennkraftmaschine einen großen Einfluß auf die variable Ventilsteuerung. Es hat sich gezeigt, daß gerade bei tiefen Temperaturen eine Berücksichtigung der Motortemperatur sich positiv auf das Fahrverhalten auswirkt. Als relevante Größe für die Beurteilung der Temperatur wird die Motoröltemperatur herangezogen, da diese Temperatur eine tatsächliche Aussage über die im Motor herrschenden Temperaturverhältnisse macht.

In einem ersten tiefen Temperaturbereich bis beispielsweise minus 30°C wird der Motor auf kleinem Hub gestartet und nach Erreichen einer stabilen Leerlaufdrehzahl wird das Ventil mit einem maximalen oder großen Hub angesteuert, und es erfolgt auch dann bei kleinen Drehzahlen keine Ventilhubumschaltung auf einen kleinen Ventilhub. In einem zweiten mittleren Temperaturbereich, der sich z.B. von -10°C bis + 35°C erstreckt, bleibt unter Umständen trotz anders lautender Schaltschwellen im Kennfeld ein großer Ventilhub bestehen, um so den Katalysator möglichst rasch auf Betriebstemperatur aufzuheizen und die Rohemissionen abzusenken. Anschließend ist der Motor warm und es kann mit den in dem Steuergerät abgelegten Kennfeldern gefahren werden. Danach folgt eine Ventilsteuerung entsprechend der in den Kennfeldern abgelegten Schaltschwellen.

## Patentansprüche

1. Brennkraftmaschine mit einer Einrichtung zur variablen Ventilsteuerung, wobei die Ventilsteuerzeiten und die Ventilhübe in Abhängigkeit der Betriebsparameter der Brennkraftmaschine festlegbar sind, wobei die Schaltschwellen für die Änderung der Ventilsteuerzeiten und der Ventilhübe in einem Kennfeld, welches sich über die Drehzahl und die Last aufspannt, abgelegt sind, **dadurch gekennzeichnet**, die Schaltschwellen in Abhängigkeit des aktuell eingelegten Ganges und/oder temperaturabhängig veränderbar sind und wobei ein Rückschalten des Ventilhubes über eine Hysterese erfolgt, die gangabhängig definiert ist.

2. Brennkraftmaschine nach Anspruch 1, **dadurch gekennzeichnet, daß** die Ermittlung der Schaltschwellen in der Applikation erfolgt.

3. Brennkraftmaschine nach Anspruch 1, **dadurch gekennzeichnet, daß** die gangabhängige Schaltschwelle jeweils einen ruckfreien Betrieb der Brennkraftmaschine beim Hubwechsel gewährleistet.

## Claims

1. An internal-combustion engine with a device for variable valve actuation, wherein the valve-actuation times and the valve strokes can be set in a manner dependent upon the operating parameters of the internal-combustion engine, wherein the shifting thresholds for altering the valve-actuation times and the valve strokes are set down in a characteristic diagram which is plotted over the rotational speed and the load, **characterized in that** the shifting thresholds can be altered in a manner dependent upon the gear speed currently engaged and/or in a manner dependent upon the temperature, and wherein a shifting back of the valve stroke takes place by way of a hysteresis which is defined in a manner dependent upon the gear speed.

2. An internal-combustion engine according to Claim 1, **characterized in that** the determination of the shifting thresholds takes place in the application.

3. An internal-combustion engine according to Claim 1, **characterized in that** the shifting threshold dependent upon the gear speed ensures in each case a jolt-free operation of the internal-combustion engine during a change in the stroke.

## Revendications

1. Moteur à combustion interne comportant un dispositif pour la commande variable des soupapes, les temps de commande des soupapes et les courses des soupapes pouvant être définis en fonction des paramètres de fonctionnement du moteur à combustion interne, les seuils de commutation pour modifier les temps de commande des soupapes et les courses des soupapes se trouvant dans un champ caractéristique qui s'étend sur la vitesse de rotation et la charge, **caractérisé en ce que** les seuils de commutation peuvent être modifiés en fonction du rapport engagé à l'instant et/ou sont variables en fonction de la température, et un retour de la course de la soupape s'effectuant par une hystérésis qui est définie en fonction du rapport.

2. Moteur à combustion interne selon la revendication 1, **caractérisé en ce que** la détermination des seuils de commutation s'effectue dans l'application.

3. Moteur à combustion interne selon la revendication 1, **caractérisé en ce que** le seuil de commutation fonction du rapport garantit un fonctionnement sans à-coup du moteur à combustion interne lors du changement de course.
